# EUROPEAN PATENT SPECIFICATION

(11) **EP 4 516 608 B1**
(45) Date of publication and mention of the grant of the patent: **17.06.2026**
(21) Application number: 24196903.9
(22) Date of filing: 28.08.2024
(51) Int. Cl.: B60T 17/22, F16D 55/22, F16D 65/00

(54) **BRAKING APPARATUS FOR A VEHICLE WITH A FILTERING ASSEMBLY FOR FILTERING PARTICULATE PRODUCED BY THE OPERATION OF THE BRAKING APPARATUS**
BREMSVORRICHTUNG FÜR EIN FAHRZEUG MIT EINER FILTERANORDNUNG ZUM FILTERN VON DURCH DEN BETRIEB DER BREMSVORRICHTUNG PRODUZIERTEM PARTIKEL
DISPOSITIF DE FREINAGE POUR UN VÉHICULE AVEC UN DISPOSITIF DE FILTRAGE POUR FILTRER DES PARTICULES PRODUITES PAR LE FONCTIONNEMENT DU DISPOSITIF DE FREINAGE

(30) Priority: 30.08.2023 IT 202300017799
(43) Date of publication of application: 05.03.2025
(73) Proprietor: FERRARI S.p.A., 41100 Modena (IT)
(72) Inventor: GIANNINI, Federico, 41100 MODENA (IT); ONORATO, Corrado, 41100 MODENA (IT)
(74) Representative: Studio Torta S.p.A.

(56) References cited:
- FR-A1- 3 116 001
- US-A1- 2017 248 180
- US-B1- 8 678 426

## Description

### TECHNICAL FIELD

The invention relates to a braking apparatus for a vehicle, with particular reference to a motor vehicle, more particularly a racing motor vehicle, although the braking apparatus is generally applicable to any type of vehicle.

### PRIOR ART

Normally, all motor vehicles include a braking apparatus that can be controlled to brake the motor vehicle, or more specifically its wheels.

In most cases, the braking apparatus includes at least one friction braking device, that is, a braking device which causes the motor vehicle to brake by means of the friction of at least two bodies in order to generate a frictional force opposing the rotation of at least one corresponding wheel about its axis.

One of the two bodies is typically fixed to the wheel, whereas the other can be selectively pressed against the body fixed to the wheel to generate the friction force, which is proportional to the pressure between the two bodies.

The bodies are generally made up of a material subject to wear, also referred to as a friction material, which tends to crumble during contact between the two bodies, thus releasing particulate.

Furthermore, the braking apparatus typically includes a plurality of cooling ducts to direct a flow of air from the outside of the motor vehicle onto the braking device to cool it down. The ducts normally even extend beyond the braking device to discharge the air that has come into contact with the braking device into the environment outside the motor vehicle.

Therefore, during braking, the released particulate is dispersed into the external environment via the air discharged by the cooling ducts.

The particulate produced by the braking devices is considered to be harmful to human health, therefore its dispersion into the environment represents an inconvenience to be mitigated, or even better overcome.

The inconvenience has an impact on all cars, but in particular in the current Formula 1, where sports regulations require that all air directed to the braking devices be discharged into the environment along a direction parallel to and opposite to the forward direction of the car, thus causing the flow to be directed towards the drivers.

In this way, the drivers are exposed to a high risk of inhaling a significant portion of the particulate released by the braking devices.

Therefore, there is a need to reduce the above-mentioned inconvenience, i.e., to reduce particulate emissions from the friction braking devices into the environment.

The object of the invention is to meet the above need, preferably in a simple and reliable way.

Examples of prior art documents can be found in US2017/248180 A1 or FR 3 116 001 A1 disclosing braking apparatus for vehicles comprising a cooling duct for cooling the brake disc extending between an air inlet for the intake of outside air and an outlet opening for discharging the air that entered through the air inlet, a filter duct extending between an inlet communicating with the outlet opening and an outlet to the external environment and valve means comprising an obstructive element and controllable according to at least a first configuration.

### DESCRIPTION OF THE INVENTION

The object is achieved by means of a braking apparatus for a vehicle according to claim 1.

The dependent claims present particular embodiments of the invention.

### BRIEF DESCRIPTION OF THE DRAWINGS

To better understand the invention, one embodiment thereof is described hereinafter by way of non-limiting example and with reference to the accompanying drawings, wherein:
- Figure 1 is a perspective view of a vehicle comprising a braking apparatus according to the invention,

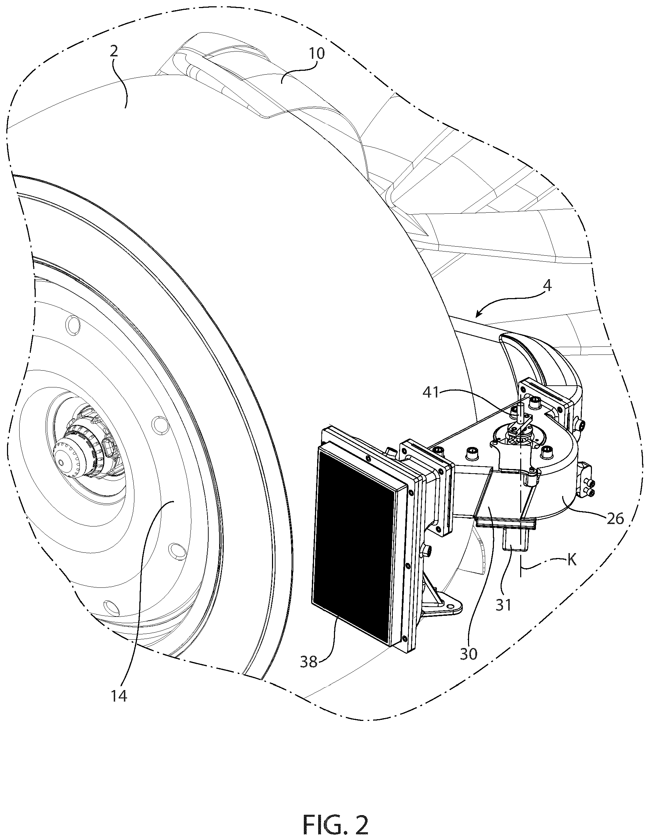

- Figure 2 is an enlargement of an area of the vehicle containing the braking apparatus,

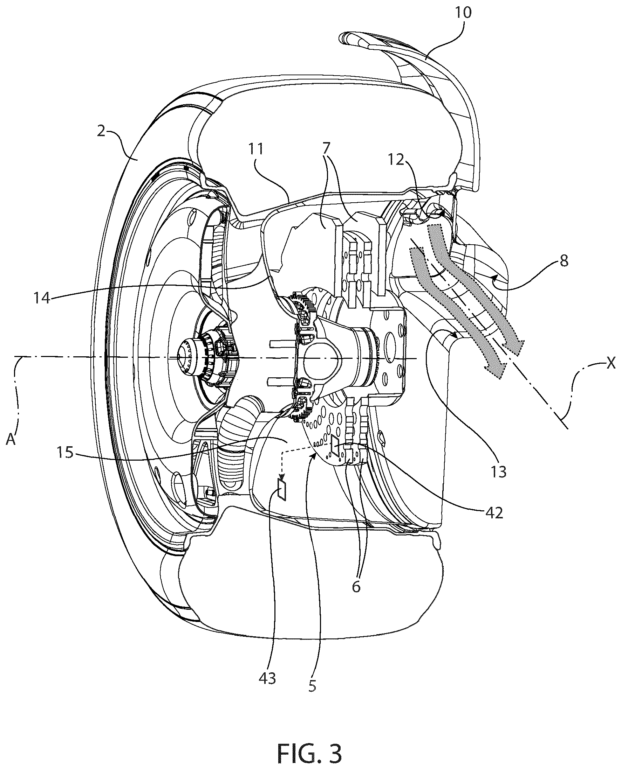

- Figure 3 is a cutaway view of a wheel assembly of the vehicle, on an enlarged scale and with parts removed for clarity.
- Figures 4 and 5 show a horizontal section of a filter duct of the braking apparatus in corresponding distinct operating configurations,

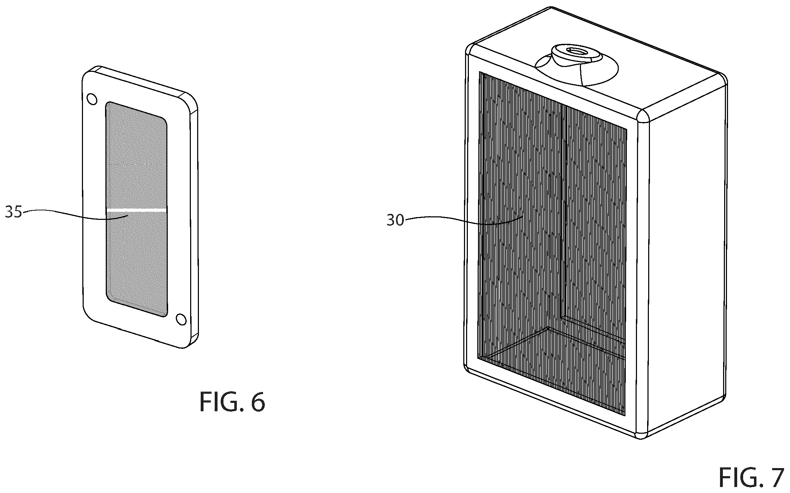

- Figures 6 and 7 are perspective views, on an enlarged scale, of particulate filters of the braking apparatus,
- Figure 8 is a portion of a vertical section of a valve device applied to the filter duct, and
- Figure 9 is a plan view of a variant of the filter duct.

### EMBODIMENTS OF THE INVENTION

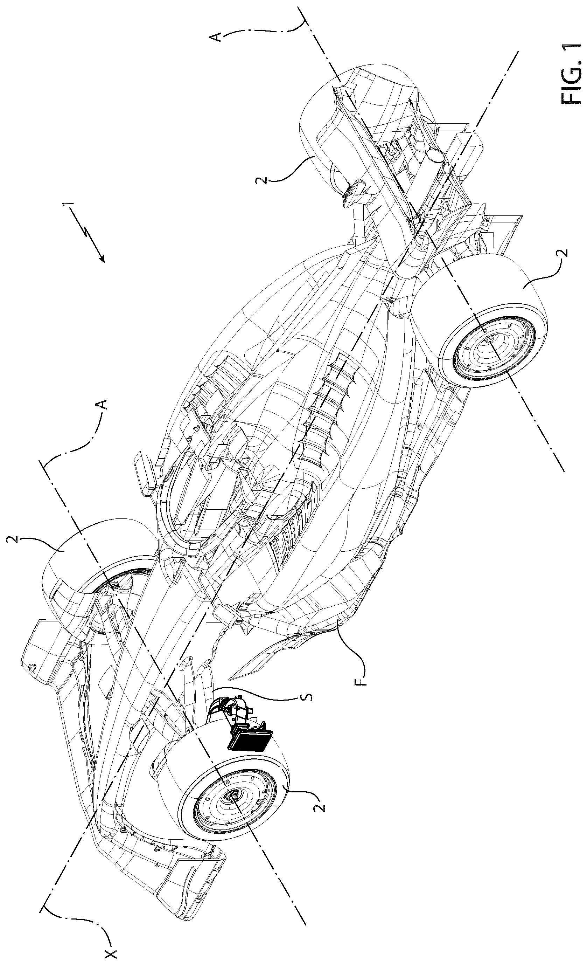

In Figure 1, reference number 1 is used to indicate a vehicle as a whole, specifically a motor vehicle, more specifically a racing motor vehicle.

According to a particular non-limiting example, the vehicle 1 is a Formula 1 single-seater, although the following is applicable to any motor vehicle.

The vehicle 1 has a forward direction, which is in practice coincident with a roll axis X of the vehicle 1, and a frame F.

Specifically, the vehicle 1 has four wheels 2, each of which can rotate around its own axis or wheel axis A, generally transversely to the forward direction.

The vehicle 1 also includes, for each of the wheels 2, a hub carrier, which is suitable for carrying the respective wheel 2 in a rotatable manner around its axis A.

The frame F is suspended in relation to the wheels 2, which are intended to grip the ground, by well-known suspensions S not described in detail.

It should be noted that the wheels 2 and the respective hub carriers are part of a non-suspended mass of the vehicle 1.

The vehicle 1 further comprises a braking apparatus 4 to brake the vehicle 1. The braking apparatus 4 is associated with or coupled to one of the wheels 2, specifically a front wheel, although each of the wheels 2 can preferably be associated with or coupled to a braking apparatus identical to the braking apparatus 4.

The braking apparatus 4 and the associated wheel 2 are therefore part of a wheel assembly of the vehicle 1.

The braking apparatus 4 comprises a braking device 5, in particular a disc type braking device, having at least one pair of friction members 6, 7, specifically at least one disc 6 and at least one pad 7. More precisely, each braking device 5 comprises two pads 7.

The following description will always refer to the disc 6 and the related pads 7, even though these components can always be replaced with generic friction members, such as, for example, a drum and a shoe, without any loss of generality.

The disc 6 is fixed to the wheel 2, that is, it rotates integrally with it around the axis A.

On the other hand, the pads 7 are free in relation to the rotation of the wheel 2, therefore they do not rotate integrally with the wheel 2, but rather they are carried by the hub carrier; the hub carrier, in turn, can be coupled to the frame F via the suspensions S.

As is known, for disc braking devices such as the specific device 5, the pads 7 can be carried by a brake caliper, which in turn can be carried by the hub carrier.

The brake caliper is a component known per se and not shown, therefore its operation and layout in relation to the vehicle 1 will not be described in further detail.

The braking device 5 can be selectively actuated to brake the vehicle 1 by pressing the disc 6 and pads 7 against each other. In other words, the brake caliper is actuated to press the pads 7 against the disc 6.

In this way, a pressure is generated between the disc 6 and the pads 7. The pressure is the cause of a frictional force acting on both the disc 6 and pads 7, but especially on the disc 6 in order to brake the rotation of the wheel 2, and hence the vehicle 1.

Therefore, the braking corresponds to the pressure generated between the disc 6 and the pads 7, i.e., the related frictional force developed, which increases with the pressure; in particular, the frictional force is proportional to the pressure.

The braking apparatus 4 further comprises a cooling duct 8 to cool the braking device 5, and in particular the disc 6 and pads 7, for example during and/or after braking.

The cooling duct 8 is defined by a plurality of walls 10, 11, of which in particular the walls 10 are part of the unsuspended masses, and of which in particular the walls 11 are fixed to the wheel 2, so they rotate integrally with the wheel 2. The wheel 2 is free to rotate with respect to the walls 10 about its axis A.

The cooling duct 8 extends between an air inlet 12 for the intake of outside air and an outlet opening 13 for the discharge of the air that entered through the air inlet 12.

At least the disc 6 and also preferably the pads 7 are arranged in the cooling duct 8 so as to be hit by the flow of air flowing through the cooling duct 8 from the air inlet 12 to the outlet opening 13.

In greater detail, the disc 6 and also preferably the pads 7 are located in the portion of the cooling duct 8 defined by the walls 11.

For example, the walls 11 can be considered as part of the wheel 2. More in particular, the walls 11 include a rim of the wheel 2.

In particular, the walls 10 comprise an annular wall 14 extending in a ring shape around the axis A and therefore arranged transversely or more precisely orthogonally to the axis A. In other words, the annular wall 14 is also part of the unsuspended mass of the vehicle 1 and is fixed to the hub carrier.

Due to its shape, the annular wall 14 is normally referred to in automotive jargon as the "donut".

In the direction of the axis A, from the outside towards the inside of the vehicle 1, the annular wall 14 covers the disc 6 and preferably also the pads 7, so that the latter components are in particular invisible from the outside of the vehicle 1.

The annular wall 14 is configured to prevent the air passing through the cooling duct 8 from flowing out of the wheel 2 along the axis A laterally towards the outside of the vehicle 1.

The annular wall 14 defines at least partially an annular channel 15 inside the wheel 2 and forming part of the cooling duct 8. The channel 15 extends in a ring shape around the axis A.

In particular, the disc 6 and preferably also the pads 7 are arranged in the annular channel 15.

In the specific example shown, although this is not essential in general, the air inlet 12 is frontal, i.e., it is directed according to the forward direction of the vehicle 1 towards the front of the vehicle 1.

Furthermore, independently, in the specific example shown, although this is not essential in general, the outlet opening 13 faces a rear of the vehicle 1 according to the forward direction.

In practice, the air flow entering the cooling duct 8 through the air inlet 12 is directed along a direction parallel to and opposite to the forward direction.

The same applies, albeit independently, to the air flow leaving the cooling duct 8 through the outlet opening 13.

Again with reference to the specific example shown, although this is not essential in general, the cooling duct 8 communicates with its exterior substantially only through the air inlet 12 and the outlet opening 13.

The term substantially refers herein to the fact that in general the cooling duct 8 extends along a path well defined by a continuous curve having two ends at the air inlet 12 and the outlet opening 13, respectively; in use, the air flow substantially follows the path, without necessarily excluding negligible escapes from gaps between the walls 10, 11.

This means that substantially all the air entering via the air inlet 12 leaves the cooling duct 8 via the outlet opening 13, unless there are refluxes through the same air inlet 12 (which would in any case be impossible, in particular, exceeding a speed threshold of the vehicle 1), or unless there are any negligible escapes.

In any case, the cooling duct 8 is an element known per se in the field, therefore a very detailed description thereof is not considered necessary.

Preferably, the outlet opening 13 and/or the air inlet 12 are defined by the walls 10.

The apparatus 4 further comprises a filter duct 20, preferably arranged on the outside of the wheel 2, for example behind the wheel 2 according to the forward direction of the vehicle 1.

The filter duct 20 is fixed in relation to the cooling duct 8, with which it communicates.

The filter duct 20 extends between an inlet communicating with the outlet opening 13 and an outlet 21 towards the external environment, i.e., communicating with the external environment, in particular directly.

In greater detail, the inlet of the filter duct 20 matches, i.e. coincides with the outlet opening 13. Therefore, all the air leaving the cooling duct 8 is transferred or passes to the filter duct 20.

In other words, the filter duct 20 is joined to the cooling duct 8 substantially in a fluid-tight manner through the outlet opening 13.

The filter duct 20 has two branches 22, 23 arranged in parallel so as to form at least a first node 24 and preferably a second node 25 distinct from the first node 24. In particular, the nodes 24 and 25 are respectively closer to and farther from the inlet of the filter duct 20, i.e., the outlet opening 13.

According to an example, not shown, the second node 25 could be missing, so that the filter duct 20 would have an additional outlet for the branch 23 in addition to the outlet 21 that would remain for the branch 22.

In practice, the filter duct 20 splits at the node 24 and preferably rejoins at the node 25.

The node 25 is thus arranged downstream of the node 24, according to the direction that the air flow would have along the filter duct 20 during the use of the vehicle 1. The outlet 21 would therefore be located downstream of the node 25.

In general, in the remainder of the description, terms such as "upstream" and "downstream" will refer to the direction of the air flow along the filter duct 20 during the use of the vehicle 1.

Clearly, the filter duct 20 is bounded by an outer casing 26; similarly, the branches 22, 23 are separated by at least one partition wall D fixed to the outer casing 26. In particular, the outer casing 26 is in turn carried by the walls 10 in a fixed position in relation to the walls 10.

The apparatus 4 also includes a valve device 27, in particular carried by the outer casing 26.

The valve device 27 comprises an obstructer element 28, for example a wall or bulkhead or a set of walls or bulkheads, adapted to plug or obstruct or close, at least partially or totally, the branches 22, 23.

Obstructing, plugging, or closing partially the branch 22 or the branch 23 means bringing the obstructer element 28 to a position or point on the branch 22 or the branch 23, thereby reducing the air flow rate through the same position on the branch 22 or the branch 23 compared to the flow rate that would occur if the obstructer element 28 had not occupied the position on the branch 22 or the branch 23. Obstructing, plugging, or closing totally the branch 22 or the branch 23 means bringing the obstructer element 28 to a position or point on the branch 22 or the branch 23, thereby preventing an air flow rate through the same position on the branch 22 or the branch 23.

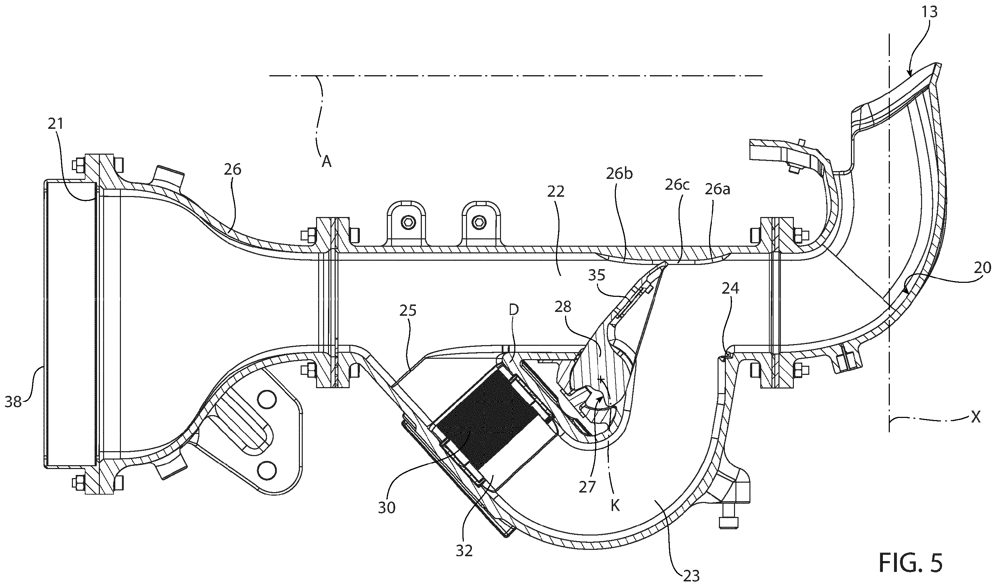

The valve device 27 can be controlled or is configured to be controlled according to at least one first configuration or filtering configuration (Figure 5), in which the obstructer element 28 obstructs at least partially or totally the branch 22 and clears or opens, in particular totally, the branch 23.

Clearing or opening the branch 22 or the branch 23 means moving the obstructer element 28 so as to increase the air flow rate through the branch 22 or the branch 23. Clearing or opening totally the branch 22 or the branch 23 means that the obstructer element 28 does not occupy or is spaced from the branch 22 or the branch 23.

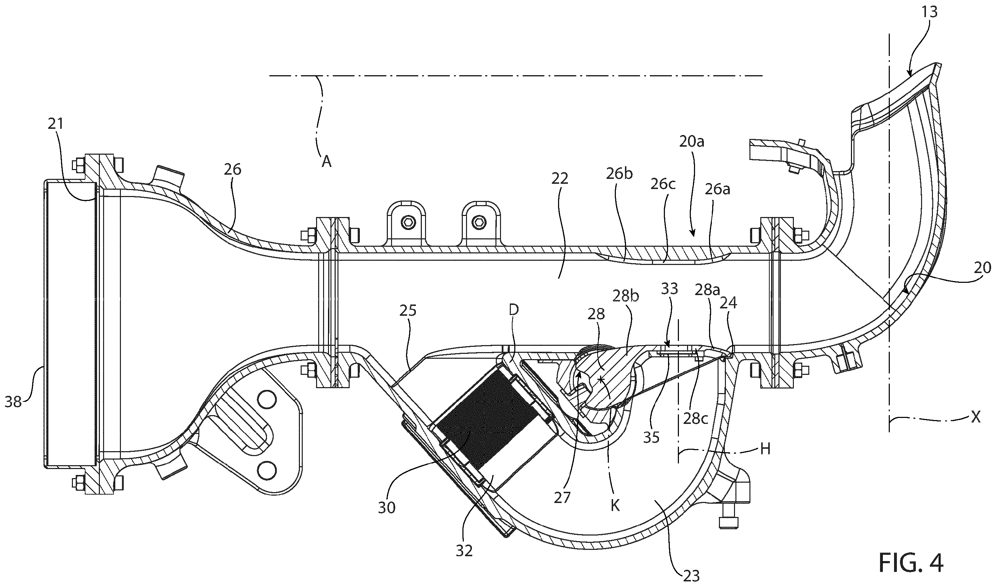

Furthermore, the valve device 27 can be controlled or is configured to be controlled according to at least one second configuration or basic configuration (Figure 4), in which the obstructer element 28 obstructs at least partially or totally the branch 23 and clears or opens, in particular totally, the branch 22.

Specifically, the valve device 27 operates at the node 24, so the obstructer element 28 is arranged at the node 24 in a movable manner between at least two positions corresponding to the filtering configuration and the basic configuration, respectively.

More specifically, the obstructer element 28 is pivoted around an axis K at the node 24, so it can rotate between two positions corresponding to the filtering configuration and the basic configuration, respectively (Figures 5 and 4). In the non-limiting embodiment shown, the axis K is vertical, i.e. directed in the direction of the force of gravity; however, the axis K could be clearly oriented differently.

The valve device 27 operates normally in the basic configuration. In other words, the valve device 27 specifically includes a return member, particularly an elastic return member, such as for example a spring 29, configured to exert a return force or reaction on the obstructer element 28 when the obstructer element 28 is moved away from the position corresponding to the basic configuration, where the return force or reaction is directed to return the obstructer element 28 to the position corresponding to the basic configuration.

The spring 29 has ends coupled to the outer casing 26 and the obstructer element 28, respectively. Specifically, the spring 29 is arranged around the axis K. In particular, the spring 29 is a torsional spring, so it is configured to exert the return reaction as a torque around the axis K.

The apparatus 4 further comprises a filter 30 arranged at the branch 23 and configured to filter particulate from the air passing through the branch 23. For example, the filter 30 is fixed in relation to the branch 23; in particular, the filter 30 is fixed to the outer casing 26 within the branch 23.

Specifically, the particulate is that produced by the pressure between the disc 6 and the pads 7 when braking the vehicle 1. The particulate may include carbonaceous particles, with the possible addition of silicon, iron, titanium, magnesium, barium, bromine, potassium, and sodium particles.

The filter 30 is more precisely configured to capture the particulate, while allowing air to pass or transpire.

In greater detail, the filter 30 comprises a filter weave capable of retaining the particulate, while allowing the air to pass through.

For example, the weave of the filter 30 may form at least one grid, for example extending over a rectangular section plane, in particular with elements oriented along the height (or the long side) or along the width (or the short side), or both, or with, alternatively or even additionally, elements oriented obliquely.

Conveniently, the grid extends over a plane inclined from a vertical plane; in this way, the captured particulate can fall more easily from the filter 30 with the contribution of gravity.

For example, the weave of the filter 30 can be a pleated weave.

Preferably, the filter 30 is configured to filter particulate with dimensions at least greater than 70 microns, more preferably at least greater than 35 microns, even more preferably at least greater than 3-4 microns.

Advantageously, the apparatus 4 also includes a reservoir 31 to collect the particulate filtered by the filter 30.

The reservoir 31 has an access port 32 at the branch 23 between the node 24 or the valve device 27 and the filter 30. The access port 32 receives the particulate into the reservoir 31; in other words, the particulate is deposited into the reservoir 31 through the access port 32.

In greater detail, the access port 32 is located in a position such as to receive particulate falling from the filter 30 by gravity or in the direction of gravity.

Specifically, the access port 32 is immediately upstream of the filter 30.

In addition, the access port 32 is preferably arranged under the filter 30, in particular immediately below it.

In other words, on the side upstream of the filter 30, the filter 30 itself faces the access port 32.
Preferably, the obstructer element 28 comprises a through-slot 33. Therefore, because of the slot 33, the branches 22, 23 will always communicate at the node 24, at least through the slot 33. In particular, it is possible to define a direction H passing through the slot 33 when the valve device 27 is in the basic configuration (Figure 4).

Preferably, the filter duct 20 comprises a portion 20a with a convergent or convergent-divergent section, proceeding, in particular transversely to the direction H, in the direction oriented from the outlet opening 13 to the outlet 21. The portion 20a is arranged along the branch 22 and at the slot 33 when the valve device 27 is arranged in the basic configuration (Figure 4). Specifically, the portion 20a is defined by the branch 22 and the obstructer 28 when the valve device 27 is arranged in the basic configuration.

In detail, proceeding along the branch 22 in the direction oriented from the outlet opening 13 towards the outlet 21 at the portion 20a, the casing 26 comprises a section 26a facing the lumen of the branch 22 and/or defining the lumen of the branch 22 and extending over progressively decreasing distances from the partition wall D along the direction H.

In the embodiment shown, the portion 20a is convergent-divergent and therefore the casing 26 further includes a section 26b, also facing the lumen of the branch 22 and/or defining the lumen of the branch 22 and extending over progressively increasing distances from the partition wall D along the direction H.

The casing 26 further comprises a section 26c facing the lumen of the branch 22, interposed between the sections 26a and 26b perpendicularly to the direction H and arranged at the minimum distance along the direction H from the partition wall D. Specifically, the section 26c is at least partly aligned with the slot 33 perpendicularly to the direction H when the valve device 27 is arranged in the basic configuration.

Similarly, when the valve device 27 is arranged in the basic configuration, proceeding along the branch 22 in the direction oriented from the outlet opening 13 towards the outlet 21, the obstructer 28 comprises:
- a section 28a facing the lumen of the branch 22 and extending over progressively increasing distances from the partition wall D along the direction H; and
- a section 28b, also facing the lumen of the branch 22 and extending over progressively decreasing distances from the partition wall D along the direction H.

The obstructer 28 further comprises a section 28c facing the lumen of the branch 22, interposed between the sections 28a and 28b perpendicularly to the direction H and arranged at the maximum distance along the direction H from the partition wall D. Specifically, the slot 33 is arranged at the section 28c.

In addition, considering a direction orthogonal to the direction H, the section 26a is at least partly aligned with the section 28a, and the section 26b is at least partly aligned with the section 28b.

In other words, the sections 26a and 28a contribute to forming the convergent region of the portion 20a; the sections 26b contribute to forming the divergent region of the portion 20a; lastly, the sections 26c and 28c define the minimum passage area of the portion 20a, at which the slot 33 is arranged.

The portion 20a is adapted to cause a depression of the flow of air flowing through the branch 22 at the slot 33.

The branches 22, 23 communicate with each other at the node 25, in particular always.

Therefore, with the valve device 27 in the basic configuration, communication between the branches 22, 23 in the node 25 may lead to a backflow of air from the node 25 towards the node 24, in particular thanks to the portion 20a. In greater detail, the air backflow is caused by the depression established at the portion 20a where the slot 33 is.

The backflow is beneficial to the filter 30, as it favours the cleaning thereof, i.e., the fall of the captured particulate, in particular towards the access port 32 or the reservoir 31.

Conveniently, in order to prevent the particulate from recirculating from the branch 23 to the branch 22 through the slot 33 due to the backflow, the apparatus 4 comprises a filter 35 at the slot 33.

The filter 35 is configured to filter the particulate from the air, similar to the filter 30, although the filter 35 may be simpler and smaller than the filter 30. In addition, the filter 35 could have less filtering power than the filter 30.

The filter 35 is configured to filter the air passing through the slot 33.

The filter 35 is preferably attached to the obstructer element 28.

Furthermore, when the valve device 27 is in the basic configuration, the filter 35 is arranged on the side of the branch 23. More generally, the filter 35 is arranged downstream of the node 24.

In the embodiment shown, the apparatus 4 preferably, but not necessarily, comprises an additional filter 38 configured to filter the air passing through the outlet 21. The filter 38 is arranged at the outlet 21.

The filter 38 could be constructively similar to the filter 35, i.e., it could have the same characteristics as described above for the filter 35.

The apparatus 4 further comprises an actuating assembly 40 configured to lead the valve device 27 into the filtering configuration from the basic configuration in response to the braking of the vehicle 1, i.e., in response to the pressure between the disc 6 and the pads 7.

In particular, the actuating assembly 40 could include an actuator 41, e.g. an electric actuator, that can be controlled to move or actuate the valve device 27 or more precisely the obstructer element 28 from the basic configuration to the filtering configuration.

In fact, the actuator 41 rotates the obstructer element 28 around the axis K, in particular against the action of the spring 29, towards the filtering configuration of the valve device 27.

In the drawings, the actuator 41 is arranged in a position aligned along the axis K with the obstructer element 28 and is preferably coupled directly to the obstructer element 28 to make it rotate. However, the actuator 41 could also be remote from the obstructer element 28 or more generally from the valve device 27; in fact, the power that actuates the valve device 27 can be transmitted by the actuator 41 via any transmission, possibly even a well-known type of transmission (for example including one or more of gear wheels, clutches, couplings, belts, cables, chains, and similar well-known transmission elements).

The actuator 41 could even be a hydraulic or pneumatic actuator, instead of an electric actuator, without any loss of generality.

Preferably, the apparatus 4 further comprises a transducer 42 configured to detect a quantity indicative of the occurrence of braking and to generate a related signal.

For example, the transducer 42 detects a quantity indicative of the pressure between the disc 6 and the pads 7.

In this case, the signal generated by the transducer 42 is indicative of the occurrence of braking when the quantity detected by the transducer 42, e.g., the pressure, exceeds a defined threshold, e.g., greater than 3 bar. In practice, the signal carries information about whether or not the pressure exceeds the pressure threshold.

The apparatus 4 also includes a control unit 43 configured to receive the signal generated by the transducer 42 and to control the actuator 41 to move or actuate the valve device 27 into the filtering configuration when the signal indicates that braking has occurred, that is, when the pressure exceeds the pressure threshold.

The pressure threshold is, for example, stored in the control unit 43.

Actuating the valve device 27 into the filtering configuration means, specifically, as already explained above, leading the obstructer element 28 from the position corresponding to the basic configuration to the position corresponding to the filtering configuration.

Preferably, the apparatus 4 further comprises a measuring or estimating device (not shown) to determine (e.g. by direct detection or by estimation from other quantities detected or determined by the control unit 43) a quantity representative of a forward movement of the vehicle 1, e.g. a quantity indicative of the speed or acceleration of the vehicle 1.

The control unit 43 is coupled to the measuring or estimating device, so as to obtain information on the determined quantity.

In particular, the control unit 43 has an additional condition, the occurrence of which is preferably necessary to control the actuator 41 to actuate the valve device 27 in the filtering configuration, in addition to the occurrence of the above described pressure threshold condition.

The additional condition is that the quantity determined by the measuring or estimating device indicates that the forward movement of the vehicle is beyond a minimum movement threshold at the time of the occurrence of braking, i.e., at the time when the pressure exceeds the pressure threshold.

For example, the additional condition occurs when the speed or acceleration of the vehicle 1 is above a corresponding minimum threshold.

The control unit 43 determines whether or not the additional condition has occurred as it is coupled to the measuring or estimating device, i.e., as it has the information on the quantity determined by the measuring or estimating device.

In this way, the control unit 43 brings the valve device 27 into the filtering configuration only if the vehicle 1 is actually moving at the time of braking. In fact, in the event that the vehicle 1 is stationary, braking would not produce a particulate to justify the filtering configuration.

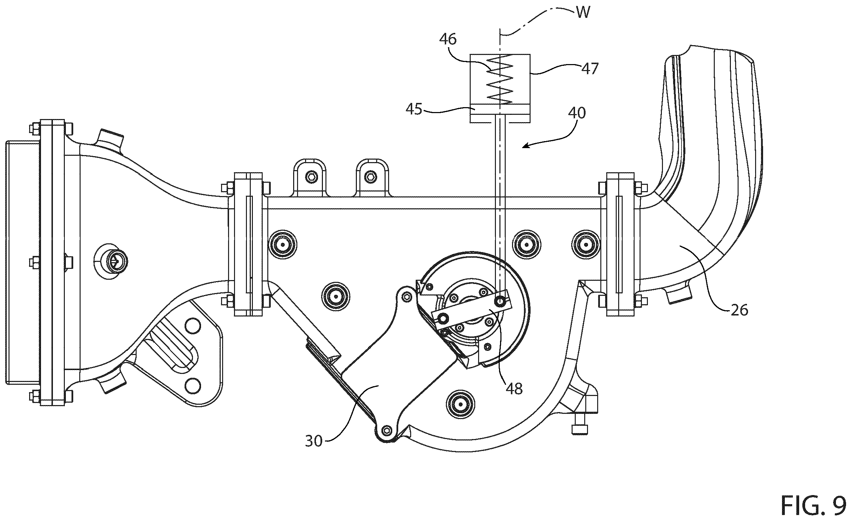

According to the variant in Figure 9, the actuator 41 is replaced in its function by a mass 45 oscillating by means of an elastic device 46, in particular a spring.

The mass 45 is part of the apparatus 4 and is coupled to a support 47, e.g., fixed in relation to the casing 26, or to another component of the vehicle 1, e.g., the filter duct 20, by means of the elastic device 46.

The support 47 is part of the apparatus 4 and is configured to guide the mass 45 along a direction W oriented to have at least one component along the forward direction of the vehicle 1, or more preferably parallel to the same forward direction.

Again with reference to the variant in Figure 9, the mass 45 is coupled to the valve device 27 or more precisely to the obstructer element 28 by means of a mechanism 48, e.g., an articulated mechanism, configured to move or actuate the valve device 27 into the filtering configuration from the basic configuration in response to a translation of the mass 45 caused by braking along the direction W with respect to the support 47 (i.e., to rotate the obstructer element 28 from the position corresponding to the basic configuration to the position corresponding to the filtering configuration).

In fact, the mass 45 moves during the braking of the vehicle 1 in relation to the support 47 due to inertial effects (in fact, the mass 45 is suspended in relation to the support 47 by means of the elastic device 46), i.e., due to the inertia force that develops on the mass 45 caused by the braking.

The movement of the mass 45 results in the actuation of the valve device 27 by means of the mechanism 48, for example also part of the apparatus 4.

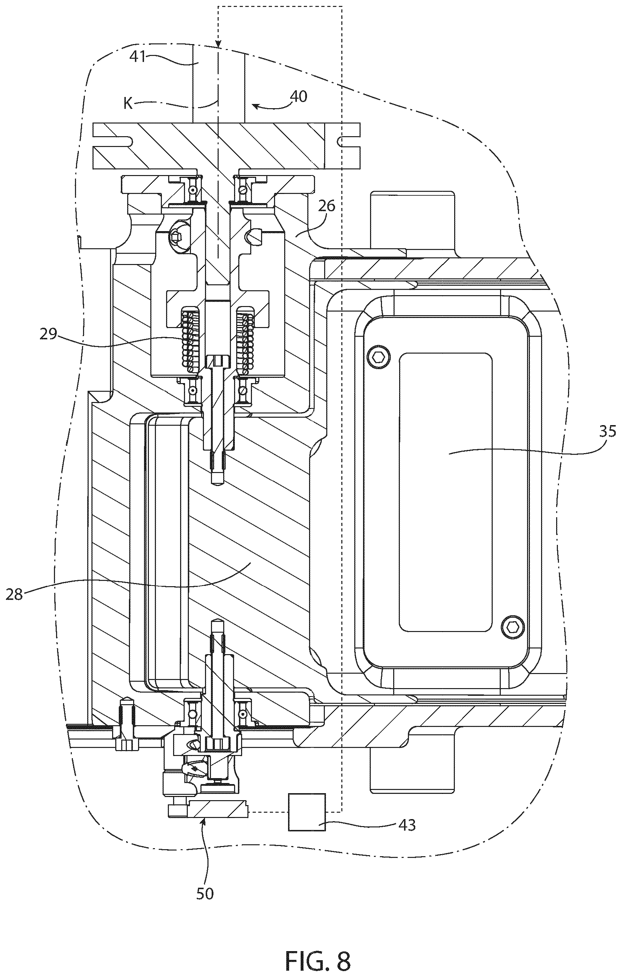

Clearly, the mechanism 48 could be made in many ways to perform its function described herein; therefore, the construction of the mechanism 48 will not be described in detail here. For example, the operation of the specific mechanism 48 shown in Figure 8 is evident from the same Figure 9.

When the braking of the motor vehicle 1 stops, the elastic device 46 returns the mass 45 to its initial position. In this way, the valve device 27 also returns to the basic configuration, for example by means of the spring 29, which actually is no longer required in this variant since its function can evidently be replaced by the elastic device 46 via the mechanism 48.

Advantageously, especially for the variant in Figure 9 or even in general, the apparatus 4 comprises a sensor 50 (Figure 8) configured to determine the position of the obstructer element 28. For example, the sensor 50 can communicate the position of the obstructer element 28 to the control unit 43.

In particular, the sensor 50 can be a magnetic sensor, more particularly a Hall effect sensor.

During the operation of the vehicle 1, the braking of the vehicle 1, i.e., the pressure between the disc 6 and the pads 7, activates the actuating assembly 40 which leads the valve device 27 into the filtering configuration.

In the meantime, the vehicle 1 is still moving forward, so an aerodynamic air flow develops in the direction opposite to the forward direction of the vehicle 1. Therefore, at least a portion of the air flow enters the cooling duct 8 via the air inlet 12.

The same portion of the air flow reaches the filter duct 20 via the outlet opening 13, after having hit and cooled the braking device 5, and in particular the disc 6 and the pads 7.

In the filtering configuration, the obstructer element 28 at least partially obstructs the branch 22, thus inducing the portion of the air flow coming from the cooling duct 8 to travel along the branch 23.

Therefore, the air flow that travels along the branch 23 is here loaded with particulate produced by the friction between the disc 6 and the pads 7.

In the branch 23, the air flow meets the filter 30, which retains the particulate and allows the air to flow towards the outlet 21 via the node 25.

When the braking stops, the actuating assembly 40 is configured to return the valve device 27 into the basic configuration. This is done, in particular, by the return member, specifically defined by the spring 29.

Here, the air flow coming from the cooling duct 8 does not contain particulate or at least contains a very small amount thereof compared to the case of braking of the vehicle 1.

Here, the obstructer element 28 at least partially obstructs the branch 23, thus inducing the portion of the air flow coming from the cooling duct 8 to pass through the branch 22. Therefore, the portion of the air flow substantially bypasses the branch 23 and reaches the outlet 21.

In this phase, the normal vibrations from the operation of the vehicle 1 help the particulate retained by the filter 30 to detach from the filter 30, so that preferably it falls into the reservoir 31.

Due to the presence of the slot 33, the air flow in any case prefers to pass through the branch 22, but a backflow can develop along the branch 23 from the node 25, where in any case the branches 22, 23 communicate with each other, towards the node 24. The backflow favours even further the detachment of the particulate from the filter 30, as well as its falling into the reservoir 31.

The advantages of the apparatus 4 and the vehicle 1 according to the invention are clear from the foregoing.

The filter duct 20 prevents the spreading of particulate from the braking device 5 into the environment.

In particular, the particulate is retained in the filter duct 20 while the vehicle 1 is moving without braking. In fact, without the braking of the vehicle 1, the airflows through the cooling duct 8 bypass the branch 23, where the filter 30 retains the particulate collected during the braking of the vehicle 1.

Here, the particulate falls into the reservoir 31, thus becoming trapped.

Lastly, it is clear that modifications and variations may be made to the apparatus 4 and the vehicle 1 according to the invention, without however departing from the scope of protection defined by the claims.

In particular, the number and shape of the components described and illustrated herein may be different.

Moreover, the various examples described herein can be combined with one another to determine further embodiments within the aforementioned scope of protection.

In particular, the braking devices 5 could be in positions other than those illustrated in relation to the wheels 2. For example, the braking devices 5 could be arranged in the centre of the vehicle 1.

## Claims

1. A braking apparatus (4) for a vehicle (1), the apparatus comprising
- a braking device (5) having at least one pair of friction members (6, 7) and selectively operable to provoke braking of the vehicle (1) by pressing the friction members (6, 7) against each other, so that the pressure between the friction members (6, 7) causes a frictional force acting on the members (6, 7) and increasing with the pressure,
- a cooling duct (8) extending between an air inlet (12) for the intake of outside air and an outlet opening (13) for discharging the air that entered through the air inlet (12), wherein at least one of the friction members (6, 7) is arranged in the cooling duct (8) so that it can be hit by a flow of air flowing through the cooling duct (8),
- a filter duct (20) extending between an inlet communicating with the outlet opening (13) and an outlet (21) to the external environment, the filter duct (20) having a first and a second branch (22, 23) arranged in parallel,
- valve means (27) comprising an obstructer element (28) and controllable according to at least a first configuration, in which the obstructer element (28) at least partially obstructs the first branch (22) and clears the second branch (23), and a second configuration, in which the obstructer element (28) at least partially obstructs the second branch (23) and clears the first branch (22),
- a first filter (30) arranged at the second branch (23) and configured to filter particulate from the air passing through the second branch (23), and
- actuating means (40) configured to drive the valve means (27) into the first configuration from the second configuration in response to the braking of the vehicle (1).

2. The braking apparatus according to claim 1, wherein the outlet opening (13) matches the inlet of the filter duct (20), so that all the air leaving the cooling duct (8) passes to the filter duct (20).

3. The braking apparatus according to claim 1 or 2, wherein the cooling duct (8) communicates with the outside only via the air intake (12) and the outlet opening (13).

4. The braking apparatus according to any one of the preceding claims, further comprising a reservoir (31) for collecting the particulate filtered by the first filter (30), the reservoir having an access port (32) for receiving the particulate at the second branch (23) between the valve means (27) and the first filter (30).

5. The braking apparatus according to claim 4, wherein the access port (32) of the reservoir (31) is located in a position to receive particulate falling from the first filter (30) by gravity, in particular immediately upstream of the first filter (30).

6. The braking apparatus according to any one of the preceding claims, wherein the obstructer element (28) comprises a slot (33) such that the first and second branches (22, 23) communicate via the slot (33) along a direction (H) passing through the slot (33) when the valve means (27) are in the second configuration.

7. The braking apparatus according to claim 6, wherein the filter duct (20) comprises a portion (20a) with a convergent or convergent-divergent type section proceeding transversely to said direction (H) in the oriented direction from said outlet opening (13) to said outlet (21); said portion (20a) being arranged along the first branch (22) and at the slot (33), when the valve means (27) are in the second configuration.

8. The braking apparatus according to claim 6 or 7, comprising a second filter (35) for filtering particulate from the air, the second filter (35) being attached to the obstructer element (28) at the slot (33).

9. The braking apparatus according to any of the preceding claims, wherein the actuating means (40) comprise
- an actuator (41) controllable to move the valve means (27) from the second configuration to the first configuration,
- a transducer (42) configured to detect a quantity indicative of the occurrence of braking and to generate a related signal, and
- a control unit (43) configured to receive the signal and to control the actuator (41) to move the valve means (27) to the first configuration when the signal indicates the occurrence of braking.

10. The braking apparatus according to claim 9, wherein the quantity is indicative of said pressure, and wherein the signal indicates the occurrence of braking when the pressure is greater than a pressure threshold.

11. The braking apparatus according to claim 9 or 10, further comprising a measuring or estimating device configured to determine a quantity representative of a forward movement of the vehicle (1), wherein the control unit (43) is coupled to the measuring or estimating device and is configured to control the actuator (41) to move the valve means (27) into the first configuration with the additional condition that the quantity determined by the measuring or estimating device indicates that the forward movement of the vehicle (1) is beyond a minimum movement threshold at the time of the occurrence of braking.

12. A wheel assembly for a vehicle, the wheel assembly comprising a wheel (2) and a braking apparatus (4) according to any one of the preceding claims, wherein one of the friction members (6, 7) is fixed to the wheel (2).

13. A vehicle comprising a wheel assembly according to claim 12.

14. The vehicle according to claim 13, having a forward direction, wherein the outlet opening (13) faces a rear of the vehicle (1) according to the forward direction, so that a flow of air flowing out through the outlet opening (13) is directed along a direction parallel to and opposite to the forward direction.

## Patentansprüche

1. Bremsgerät (4) für ein Fahrzeug (1), wobei das Gerät umfasst
- eine Bremsvorrichtung (5) mit mindestens einem Paar von Reibelementen (6, 7), die selektiv betätigbar ist, um ein Bremsen des Fahrzeugs (1) durch Drücken der Reibelemente (6, 7) gegeneinander zu bewirken, so dass der Druck zwischen den Reibelementen (6, 7) eine Reibungskraft verursacht, die auf die Elemente (6, 7) wirkt und mit dem Druck zunimmt,
- einen Kühlkanal (8), der sich zwischen einem Lufteinlass (12) für den Eintritt von Außenluft und einer Auslassöffnung (13) zum Abführen der durch den Lufteinlass (12) eingetretenen Luft erstreckt, wobei mindestens eines der Reibelemente (6, 7) in dem Kühlkanal (8) angeordnet ist, sodass es von einem durch den Kühlkanal (8) strömenden Luftstrom getroffen werden kann,
- einen Filterkanal (20), der sich zwischen einem mit der Auslassöffnung (13) kommunizierenden Einlass und einem Auslass (21) in die äußere Umgebung erstreckt, wobei der Filterkanal (20) einen ersten und einen zweiten Zweig (22, 23) aufweist, die parallel angeordnet sind,
- Ventilmittel (27), die ein Blockierelement (28) umfassen und gemäß mindestens einer ersten Konfiguration, in der das Blockierelement (28) den ersten Zweig (22) mindestens teilweise blockiert und den zweiten Zweig (23) freigibt, und einer zweiten Konfiguration, in der das Blockierelement (28) den zweiten Zweig (23) mindestens teilweise blockiert und den ersten Zweig (22) freigibt, steuerbar sind,
- einen ersten Filter (30), der am zweiten Zweig (23) angeordnet und konfiguriert ist, um Partikel aus der durch den zweiten Zweig (23) strömenden Luft zu filtern, und
- Betätigungsmittel (40), die konfiguriert sind, um die Ventilmittel (27) als Reaktion auf das Bremsen des Fahrzeugs (1) von der zweiten Konfiguration in die erste Konfiguration anzutreiben.

2. Bremsgerät nach Anspruch 1, wobei die Auslassöffnung (13) mit dem Einlass des Filterkanals (20) übereinstimmt, so dass die gesamte den Kühlkanal (8) verlassende Luft in den Filterkanal (20) gelangt.

3. Bremsgerät nach Anspruch 1 oder 2, wobei der Kühlkanal (8) nur über den Lufteintritt (12) und die Auslassöffnung (13) nach außen kommuniziert.

4. Bremsgerät nach einem der vorhergehenden Ansprüche, ferner umfassend einen Behälter (31) zum Sammeln der vom ersten Filter (30) gefilterten Partikel, wobei der Behälter eine Zugangsöffnung (32) zum Aufnehmen der Partikel am zweiten Zweig (23) zwischen den Ventilmitteln (27) und dem ersten Filter (30) aufweist.

5. Bremsgerät nach Anspruch 4, wobei die Zugangsöffnung (32) des Behälters (31) in einer Position angeordnet ist, um Partikel aufzunehmen, die durch Schwerkraft vom ersten Filter (30) fallen, insbesondere unmittelbar stromaufwärts des ersten Filters (30).

6. Bremsgerät nach einem der vorhergehenden Ansprüche, wobei das Blockierelement (28) einen Schlitz (33) umfasst, so dass der erste und der zweite Zweig (22, 23) über den Schlitz (33) entlang einer Richtung (H) kommunizieren, die durch den Schlitz (33) verläuft, wenn sich die Ventilmittel (27) in der zweiten Konfiguration befinden.

7. Bremsgerät nach Anspruch 6, wobei der Filterkanal (20) einen Abschnitt (20a) mit einem Teil vom konvergenten oder konvergent-divergenten Typ umfasst, der quer zu der Richtung (H) in der orientierten Richtung von der Auslassöffnung (13) zu dem Auslass (21) verläuft; wobei der Abschnitt (20a) entlang des ersten Zweigs (22) und am Schlitz (33) angeordnet ist, wenn sich die Ventilmittel (27) in der zweiten Konfiguration befinden.

8. Bremsgerät nach Anspruch 6 oder 7, umfassend einen zweiten Filter (35) zum Filtern von Partikeln aus der Luft, wobei der zweite Filter (35) an dem Blockierelement (28) am Schlitz (33) angebracht ist.

9. Bremsgerät nach einem der vorhergehenden Ansprüche, wobei die Betätigungsmittel (40) umfassen
- einen Aktuator (41), der steuerbar ist, um die Ventilmittel (27) von der zweiten Konfiguration in die erste Konfiguration zu bewegen,
- einen Wandler (42), der konfiguriert ist, um eine Größe zu erfassen, die das Auftreten eines Bremsvorgangs anzeigt, und um ein entsprechendes Signal zu erzeugen, und
- eine Steuereinheit (43), die so konfiguriert ist, dass sie das Signal empfängt und den Aktuator (41) steuert, um die Ventilmittel (27) in die erste Konfiguration zu bewegen, wenn das Signal das Auftreten eines Bremsvorgangs anzeigt.

10. Bremsgerät nach Anspruch 9, wobei die Größe den Druck anzeigt und wobei das Signal das Auftreten eines Bremsvorgangs anzeigt, wenn der Druck größer als ein Druckschwellenwert ist.

11. Bremsgerät nach Anspruch 9 oder 10, ferner umfassend eine Mess- oder Schätzvorrichtung, die konfiguriert ist, um eine Größe zu bestimmen, die für eine Vorwärtsbewegung des Fahrzeugs (1) repräsentativ ist, wobei die Steuereinheit (43) mit der Mess- oder Schätzvorrichtung gekoppelt ist und so konfiguriert ist, dass sie den Aktuator (41) steuert, um die Ventilmittel (27) in die erste Konfiguration mit der zusätzlichen Bedingung zu bewegen, dass die durch die Mess- oder Schätzvorrichtung bestimmte Größe anzeigt, dass die Vorwärtsbewegung des Fahrzeugs (1) zum Zeitpunkt des Auftretens eines Bremsvorgangs über einem Mindestbewegungsschwellenwert liegt.

12. Radbaugruppe für ein Fahrzeug, wobei die Radbaugruppe ein Rad (2) und ein Bremsgerät (4) nach einem der vorhergehenden Ansprüche umfasst, wobei eines der Reibelemente (6, 7) an dem Rad (2) befestigt ist.

13. Fahrzeug, umfassend eine Radbaugruppe nach Anspruch 12.

14. Fahrzeug nach Anspruch 13, das eine Vorwärtsrichtung aufweist, wobei die Auslassöffnung (13) gemäß der Vorwärtsrichtung einem Heck des Fahrzeugs (1) zugewandt ist, so dass ein Luftstrom, der durch die Auslassöffnung (13) ausströmt, entlang einer Richtung parallel zu und entgegengesetzt zu der Vorwärtsrichtung gerichtet ist.

## Revendications

1. Appareil de freinage (4) pour un véhicule (1), l'appareil comprenant
- un dispositif de freinage (5) comportant au moins une paire d'éléments de friction (6, 7) et pouvant fonctionner sélectivement pour provoquer le freinage du véhicule (1) en pressant les éléments de friction (6, 7) l'un contre l'autre, de sorte que la pression entre les éléments de friction (6, 7) provoque une force de friction agissant sur les éléments (6, 7) et augmentant avec la pression,
- un conduit de refroidissement (8) s'étendant entre une entrée d'air (12) pour l'admission d'air extérieur et une ouverture de sortie (13) pour l'évacuation de l'air qui est entré par l'entrée d'air (12), dans lequel au moins un des éléments de friction (6, 7) est disposé dans le conduit de refroidissement (8) de manière à pouvoir être frappé par un flux d'air circulant dans le conduit de refroidissement (8),
- un conduit de filtre (20) s'étendant entre une entrée communiquant avec l'ouverture de sortie (13) et une sortie (21) vers l'environnement extérieur, le conduit de filtre (20) ayant une première et une seconde branche (22, 23) disposées en parallèle,
- des moyens de vanne (27) comprenant un élément obturateur (28) et pouvant être commandé selon au moins une première configuration, dans laquelle l'élément obturateur (28) obture au moins partiellement la première branche (22) et libère la deuxième branche (23), et une deuxième configuration, dans laquelle l'élément obturateur (28) obture au moins partiellement la deuxième branche (23) et libère la première branche (22),
- un premier filtre (30) disposé sur la deuxième branche (23) et configuré pour filtrer des particules de l'air traversant la deuxième branche (23), et
- des moyens d'actionnement (40) configurés pour faire passer les moyens de vanne (27) de la deuxième configuration à la première configuration en réponse au freinage du véhicule (1).

2. Appareil de freinage selon la revendication 1, dans lequel l'ouverture de sortie (13) correspond à l'entrée du conduit de filtre (20), de sorte que tout l'air quittant le conduit de refroidissement (8) passe dans le conduit de filtre (20).

3. Appareil de freinage selon la revendication 1 ou 2, dans lequel le conduit de refroidissement (8) communique avec l'extérieur uniquement par l'entrée d'air (12) et l'ouverture de sortie (13).

4. Appareil de freinage selon l'une quelconque des revendications précédentes, comprenant en outre un réservoir (31) pour collecter les particules filtrées par le premier filtre (30), le réservoir ayant un orifice d'accès (32) pour recevoir les particules au niveau de la deuxième branche (23) entre les moyens de vanne (27) et le premier filtre (30).

5. Appareil de freinage selon la revendication 4, dans lequel l'orifice d'accès (32) du réservoir (31) est situé dans une position permettant de recevoir les particules tombant du premier filtre (30) par gravité, en particulier immédiatement en amont du premier filtre (30).

6. Appareil de freinage selon l'une quelconque des revendications précédentes, dans lequel l'élément obturateur (28) comprend une fente (33) telle que les première et deuxième branches (22, 23) communiquent via la fente (33) suivant une direction (H) traversant la fente (33) lorsque les moyens de vanne (27) sont dans la deuxième configuration.

7. Appareil de freinage selon la revendication 6, dans lequel le conduit de filtre (20) comprend une partie (20a) avec une section de type convergent ou convergent-divergent allant transversalement à ladite direction (H) dans la direction orientée de ladite ouverture de sortie (13) à ladite sortie (21) ; ladite partie (20a) étant disposée le long de la première branche (22) et au niveau de la fente (33), lorsque les moyens de vanne (27) sont dans la deuxième configuration.

8. Appareil de freinage selon la revendication 6 ou 7, comprenant un second filtre (35) pour filtrer des particules de l'air, le second filtre (35) étant fixé à l'élément obturateur (28) au niveau de la fente (33).

9. Appareil de freinage selon l'une quelconque des revendications précédentes, dans lequel les moyens d'actionnement (40) comprennent
- un actionneur (41) pouvant être commandé pour déplacer les moyens de vanne (27) de la deuxième configuration à la première configuration,
- un transducteur (42) configuré pour détecter une quantité indicative de l'occurrence du freinage et pour générer un signal correspondant, et
- une unité de commande (43) configurée pour recevoir le signal et pour commander l'actionneur (41) afin de déplacer les moyens de vanne (27) vers la première configuration lorsque le signal indique l'occurrence du freinage.

10. Appareil de freinage selon la revendication 9, dans lequel la quantité est indicative de ladite pression, et dans lequel le signal indique l'occurrence du freinage lorsque la pression est supérieure à un seuil de pression.

11. Appareil de freinage selon la revendication 9 ou 10, comprenant en outre un dispositif de mesure ou d'estimation configuré pour déterminer une quantité représentative d'un mouvement vers l'avant du véhicule (1), dans lequel l'unité de commande (43) est couplée au dispositif de mesure ou d'estimation et est configurée pour commander l'actionneur (41) afin de déplacer les moyens de vanne (27) dans la première configuration à la condition supplémentaire que la quantité déterminée par le dispositif de mesure ou d'estimation indique que le mouvement vers l'avant du véhicule (1) est au-delà d'un seuil de mouvement minimum au moment de l'occurrence du freinage.

12. Ensemble de roue pour un véhicule, l'ensemble de roue comprenant une roue (2) et un dispositif de freinage (4) selon l'une quelconque des revendications précédentes, dans lequel l'un des éléments de friction (6, 7) est fixé à la roue (2).

13. Véhicule comprenant un ensemble de roue selon la revendication 12.

14. Véhicule selon la revendication 13, ayant une direction avant, dans lequel l'ouverture de sortie (13) fait face à l'arrière du véhicule (1) selon la direction avant, de sorte qu'un flux d'air s'écoulant par l'ouverture de sortie (13) est dirigé le long d'une direction parallèle et opposée à la direction avant.
